# EUROPEAN PATENT SPECIFICATION

(11) **EP 4 485 116 B1**
(45) Date of publication and mention of the grant of the patent: **09.12.2026**
(21) Application number: 23758926.2
(22) Date of filing: 13.01.2023
(51) Int. Cl.: G06T 7/12, G05D 1/242, G05D 1/243, G05D 1/689, G05D 105/10, G05D 105/80, G05D 109/10, G06V 10/44, G06V 20/56

(54) **OBJECT INFORMATION DETERMINATION METHOD, MOBILE ROBOT SYSTEM, AND ELECTRONIC DEVICE**
OBJEKTINFORMATIONSBESTIMMUNGSVERFAHREN, MOBILES ROBOTERSYSTEM UND ELEKTRONISCHE VORRICHTUNG
PROCÉDÉ DE DÉTERMINATION D'INFORMATIONS D'OBJET, SYSTÈME DE ROBOT MOBILE ET DISPOSITIF ÉLECTRONIQUE

(30) Priority: 23.02.2022 CN 202210168135
(43) Date of publication of application: 01.01.2025
(73) Proprietor: Hangzhou Ezviz Software Co., Ltd., Zhejiang 310051 (CN)
(72) Inventor: SU, Hui, Hangzhou, Zhejiang 310051 (CN); JIANG, Haiqing, Hangzhou, Zhejiang 310051 (CN)
(74) Representative: Epping - Hermann - Fischer
(86) International application number: PCT/CN2023/072179
(87) International publication number: WO 2023/160301

(56) References cited:
- WO-A1-2021/223124
- CN-A- 106 443 650
- CN-A- 106 683 173
- CN-A- 108 510 515
- CN-A- 108 805 940
- CN-A- 109 544 633
- CN-A- 109 544 633
- CN-A- 110 310 371
- CN-A- 112 070 782
- CN-A- 114 564 014
- US-A1- 2018 353 042
- US-A1- 2020 380 316
- OH JUNG H ET AL: "Object map building on various terrains for a Wheeled mobile robot", 2017 IEEE INTERNATIONAL CONFERENCE ON MULTISENSOR FUSION AND INTEGRATION FOR INTELLIGENT SYSTEMS (MFI), IEEE, 16 November 2017 (2017-11-16), pages 378 - 383, XP033264754, DOI: 10.1109/MFI.2017.8170350

## Description

The present application claims the priority to a Chinese Patent Application No. 202210168135.3 filed with the State Intellectual Property Office of People's Republic of China on February 23, 2022 and entitled "METHOD FOR DETERMINING OBJECT INFORMATION, MOBILE ROBOT SYSTEM AND ELECTRONIC DEVICE".

### Technical field

The present application relates to the technical field of mobile robots, in particular to a method for determining object information, a mobile robot system, and an electronic device.

### Background

In recent years, with the continuous development of robot technologies, a mobile robot plays an increasingly important role in life, such a household or commercial sweeping robot, guiding robot and so on.

In order to avoid collision with objects during moving, an obstacle avoidance function is a basic function that a mobile robot is required to realize, and the realization of the obstacle avoidance function requires the mobile robot to be able to perceive contour information of an object in the environment. Therefore, how to determine the contour information of the object in the environment is an urgent technical problem that needs to be solved.

US2018353042A1 provides a cleaning robot, which includes a distance measuring sensor configured to measure distance information to an object located outside the cleaning robot, a memory configured to store a shape of the object, the distance information, and a plurality of commands based on the distance information to the object which is measured through the distance measuring sensor, and a processor configured to, when the cleaning robot is operated, estimate a type of the object by applying the shape of the object and the distance information stored in the memory to a learning network model configured to estimate a type of the object, and when the object is in a type that the object is to be avoided, re-set a driving route of the cleaning robot, and when the type of the object is an object to be driven, perform the commands which are set to maintain a driving route of the cleaning robot in progress, wherein the learning network model which is configured to estimate the type of the object is a learning network model which learns using a shape of the object, distance information to the object, and information of a type of the object.

Document OH JUNG H ET AL: "Object map building on various terrains for a Wheeled mobile robot" presents an objects-based topological mapping algorithm on different floors with various objects using a wheeled mobile robot. The extended Kalman filter (EKF) with adaptive measurement noise according to the terrain type is proposed to estimate the position of the robot. If an infrared distance sensor detects an object, the robot moves around the object to obtain the shape information. The rowwise max-pooling with a convolutional neural network (CNN) is proposed to classify objects regardless of the starting position of the observation. Finally, the object map consisting of nodes and edges generated from the classified objects and the distance between objects. Experimental results showed that the proposed algorithm could improve an accuracy of position estimation of the robot and efficiently generated the object map on various terrains.

.CN106443650A provides a monocular vision ranging method based on geometric relation, including the following steps: S1, calculating a distance between a section straight line of a target object and a camera lens in a horizontal plane; S2, calculating a distance between the target object and an optical axis of a monocular lens through the triangle similarity principle. According to the projection model of a camera, the method obtains the relation between a road surface coordinate system and an image coordinate system through geometric derivation, having a simple calculation process, a low calculation complexity, and low requirements for hardware while achieving a higher precision with the error within 0.5m.

CN109544633A provides a target ranging method, device and apparatus, which relate to the traffic field. The method includes the following steps: selecting a traffic target located in front of or on the side of a reference target in an image, wherein the image is taken by a monocular camera mounted on the reference target; reading the internal and external parameters of the monocular camera, and reading the size of the traffic object from the preset standard; calculating the distance between the traffic target and the reference target according to the internal and external parameters and the size of the traffic object.

### Summary

The embodiments of the present application aim to provide a method for determining object information, a mobile robot system and an electronic device, so as to determine contour information of an object in the environment.

The invention is set out in the appended set of claims.

Beneficial effects brought by embodiments of the present application are as follows:
In the method for determining object information provided by the embodiment of the present application, multiple frames of images that contain a target object collected by a mobile robot during a circling motion around the target object performed by the mobile robot, can be obtained; for each frame of image obtained, a relative distance the target object and the mobile robot at a moment of the mobile robot collecting the frame of image is identified; contour information of the target object is determined on the basis of relative distances between the target object and the mobile robot at moments of the mobile robot collecting all of the frames of images, as well as position information of the mobile robot in the world coordinate system. Since the obtained multiple frames of images are collected by the mobile robot during it performing a circling motion around the target object, the obtained multiple frames of images are images of the target object in different orientations collected by the mobile robot. And the relative distance between the target object and the mobile robot at a moment of the mobile robot collecting each frame of image is a distance between a contour edge of the target object and the mobile robot at the moment of the mobile robot collecting the frame of image. Then contour information of the target object can be determined by taking further the position information of the mobile robot in the world coordinate system at the moment of the mobile robot the mobile robot collects the frame of image into consideration. It can be seen that the contour information of an object in the environment can be determined through this solution.

Of course, it is not necessary for any product or method implementing the present application to achieve all the advantages described above simultaneously.

### Brief Description of the Drawings

The accompanying drawings described herein are intended to provide a further understanding of the present application and constitute a part of the present application. The illustrative embodiments of the present application and their descriptions are used to explain the present application and do not constitute improper limitations of the present application.
Figure 1 is a first flow chart of a method for determining object information provided by an embodiment of the present application;
Figure 2(a) is a schematic diagram of a circular motion provided by an embodiment of the present application;
Figure 2(b) is a schematic diagram of a multi-segment arc motion provided by an embodiment of the present application;
Figure 3 is a second flow chart of a method for determining object information provided by an embodiment of the present application;
Figure 4 is a schematic diagram of an image containing a target object provided by an embodiment of the present application;
Figure 5 is a third flow chart of a method for determining object information provided by an embodiment of the present application;
Figure 6 is a schematic diagram of a global side view provided by an embodiment of the present application;
Figure 7 is a fourth flow chart of a method for determining object information provided by an embodiment of the present application;
Figure 8 is a schematic diagram of another global side view provided by an embodiment of the present application;
Figure 9 is a first schematic diagram of a structure of a mobile robot system provided by an embodiment of the present application;
Figure 10 is a second schematic diagram of a structure of a mobile robot system provided by an embodiment of the present application;
Figure 11 is a schematic diagram of a structure of an apparatus for determining object information provided by an embodiment of the present application;
Figure 12 is a schematic diagram of a structure of an electronic device provided by an embodiment of the present application.

### Detailed Description

In order to make the objective, technical solutions and advantages of the present application clearer and more understandable, the application will be described in more detail below with reference to the accompanying drawings and embodiments. Obviously, the described embodiments are only some, and not all, of the embodiments of the present application.

An obstacle avoidance function is a basic function that a mobile robot is required to realize, and the realization of the obstacle avoidance function requires the mobile robot to be able to perceive contour information of an object in the environment. Therefore, how to determine the contour information of the object in the environment is an urgent technical problem that needs to be solved.

In order to determine the contour information of the object in the environment, embodiments of the present application provides a method for determining object information, a mobile robot system and an electronic device.

It should be noted that in specific applications, the method for determining object information provided by an embodiment of the present application can be applied to a mobile robot, such as a sweeping robots or a guiding robot. Alternatively, the method for determining object information provided by the embodiment of the present application can further be applied to other types of electronic devices, such as a smart phone, a personal computer, a server and other devices with data processing capability. When applied to other types of electronic devices, the electronic device can be combined and communicate with a mobile robot, so that an image required for processing can be obtained from the mobile robot. In addition, it can be understood that the method for determining object information provided by the embodiment of the present application can be realized by software, hardware or a combination thereof.

Wherein the method for determining object information provided by the embodiment of the present application can include:
obtaining multiple frames of images that contain a target object, collected by a mobile robot during a circling motion around the target object performed by the mobile robot;
for each frame of image obtained, identifying a relative distance between the target object and the mobile robot at a moment of the mobile robot collecting the frame of image;
determining contour information of the target object on a basis of relative distances between the target object and the mobile robot at moments of the mobile robot collecting all of the frames of images, as well as position information of the mobile robot in a world coordinate system.

In the above solution provided by the embodiment of the present application, since the obtained multiple frames of images are collected by the mobile robot during it performing a circling motion around the target object, the obtained multiple frames of images are images of the target object in different orientations collected by the mobile robot. And a relative distance between the target object and the mobile robot at a moment of the mobile robot collecting each frame of image is a distance between a contour edge of the target object and the mobile robot at the moment of the mobile robot collecting the frame of image. Then contour information of the target object can be determined by taking further the position information of the mobile robot in the world coordinate system at the moment of the mobile robot collecting the frame of image into consideration. It can be seen that contour information of an object in the environment can be determined by means of this solution.

The method for determining object information provided by the embodiment of the present application will be described in detail below with reference to the accompanying drawings of the description.

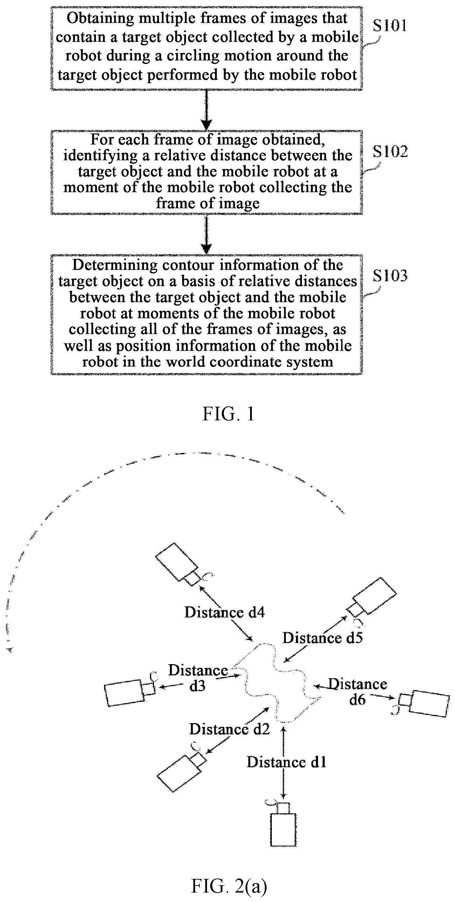

As shown in Figure 1, a method for determining object information provided by the embodiment of the present application can include steps S101-S103, wherein:
S101, obtaining multiple frames of images that contain a target object, collected by a mobile robot during a circling motion around the target object performed by the mobile robot.

The target object can be an object which is detected by a mobile robot during motion and of which object information has not been obtained. For example, the mobile robot is a sweeping robot, when the sweeping robot detects that a moving path is obstructed by obstacles such as trash cans, toys, stools or slippers during moving, the obstacles preventing the sweeping robot from moving along an original moving path can be regarded as the target object referred to in the present application. Of course, it is possible that the target object can also be a manually specified object.

The above circling motion refers to a motion mode in which a mobile robot moves around the target object for at least one circle. Of course, when the target object has a blocked side, the above circling motion can also be a partial circling motion of the mobile robot around the target object. For example, when a stool is placed against the wall, a process of the above circling motion of the mobile robot around the stool can refer to a process of the mobile robot moving around an outer edge of the stool. The above obtained multiple frames of images can be images obtained by shooting the target object during circling motion of the mobile robot.

In order to collect multiple frames of images containing a target object during the mobile robot performs the circling motion around the target object, the mobile robot can adopt various motion modes to realize a circling motion around the target object.

Optionally, the mobile robot can performs a continuous circular motion around the target object.

The continuous circular motion refers to a motion going around the target object uninterruptedly. As shown in Figure 2(a), the embodiment of the present application provides a schematic diagram of a circular motion, in which the irregular body is the target object, and the direction indicated by the arc indicates a circular motion of a mobile robot C around the target object counterclockwise. During the circular motion, the mobile robot C collects images of the target object in different directions and positions.

Since the mobile robot needs to collect images of the target object during its circular motion, a camera orientation of the mobile robot and its moving direction are constantly changing, thereby using the mobile robot in circular motion in which the camera orientation of the mobile robot is independent of the moving direction of the mobile robot. That is, when the camera orientation of the mobile robot is independent of the moving direction of the mobile robot, the mobile robot can perform a continuously circular motion around the target object.

However, if the camera orientation of the mobile robot is dependent on the moving direction of the mobile robot, for example, if the camera orientation of the mobile robot points directly in front of the mobile robot, while if the mobile robot still adopts a circular motion, it will cause that the mobile robot cannot collect the image of the target object during motion. In order to solve this problem, the present application further provides a motion mode of a multi-segment arc motion.

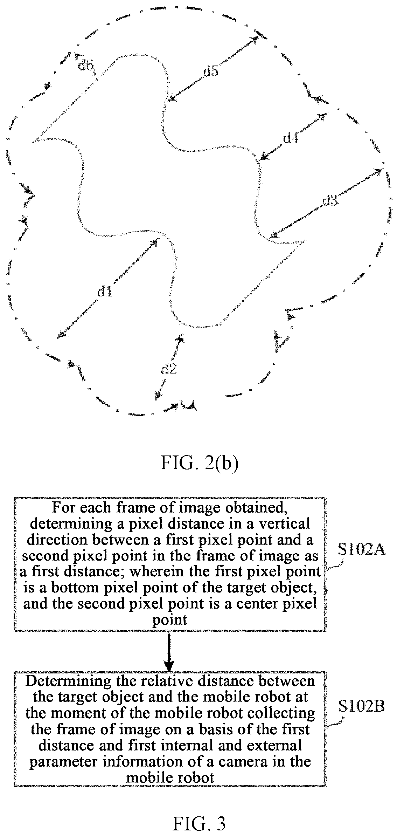

As shown in Figure 2(b), the embodiment of the present application provides a schematic diagram of a multi-segment arc motion. After moving around the target object for an arc, the mobile robot can adjust the camera orientation to face the target object, collect an image of the target object once, continue to move for a next arc, and repeat the above process, until it moves around the target object for at least one circle.

It can be seen that in a case that the camera orientation of the mobile robot is dependent on the moving direction of the mobile robot, the mobile robot performs a multi-segment arc motion around the target object. Of course, when the camera orientation of the mobile robot is independent of the moving direction of the mobile robot, it is also possible to complete the circling motion around the target object in the form of multi-segment arc motion.

S102, for each frame of image obtained, identifying a relative distance between the target object and the mobile robot at a moment of the mobile robot collecting the frame of image.

Taking Figure 2(a) as an example, when the image obtained by the mobile robot is collected by the mobile robot at a moment of the mobile robot moving directly below the target object, the relative distance between the target object and the mobile robot at a moment of the mobile robot collecting the frame of image can be determined as a distance d1 by using the obtained image.

When the mobile robot includes a depth camera, for example, the mobile robot includes a structured light depth camera, a binocular camera, a TOF (Time of Flight) depth camera, a binocular stereo vision camera, etc., the obtained image includes depth information, so that for each frame of image obtained, the relative distance between the target object and the mobile robot at a moment of the mobile robot collecting the frame of image can be identified by using the depth information recorded in the image.

Of course, the hardware cost of the depth camera is high. In order to save the hardware cost, the embodiment of the present application further provides a method for identifying a relative distance between the target object and the mobile robot at a moment of the mobile robot collecting the frame of image on the basis of a monocular camera collecting the image. It will be explained in detail in the subsequent embodiments, and will not be repeated here.

S103, determining contour information of the target object on the basis of relative distances between the target object and the mobile robot at moments of the mobile robot collecting all of the frames of images, as well as position information of the mobile robot in a world coordinate system.

After identifying the relative distances between the target object and the mobile robot at the moments of the mobile robot collecting all of the frames of images, contour information of the target object can be determined on the basis of the relative distances between the target object and the mobile robot at the moments of the mobile robot collecting all of the frames of images, as well as position information of the mobile robot in a world coordinate system.

The position information of the mobile robot in the world coordinate system can be three-dimensional coordinates of the mobile robot in the world coordinate system. Wherein, the world coordinate system is a coordinate system established by the mobile robot when it is in a new environment. In general, taking its moving initial point (such as a charging position of a sweeping robot) as an origin of coordinates, the mobile robot can update its position in the world coordinate system in real time by combining information such as distance and direction during moving. Of course, when a moving surface of the mobile robot is flat or nearly flat, the position information of the mobile robot in the world coordinate system can also be simplified to two-dimensional coordinates of the mobile robot in the world coordinate system, with ignoring height information of the mobile robot, so that it is also possible that a projection position of the mobile robot on its moving surface can be represented by the two-dimensional coordinates.

In the embodiment of the present application, when the mobile robot collects each frame of image, it can simultaneously record its position information in the world coordinate system at the moment of the mobile robot collecting the frame of image. If an execution subject of the embodiment of the present application is an electronic device that communicates with the mobile robot, the electronic device obtains the position information of the mobile robot in the world coordinate system at moments of the mobile robot collecting all of the frames of images, while the electronic device obtaining the image collected by the mobile robot.

Optionally, for each frame of image, the position of a target edge point of the target object can be determined as a corresponding edge position of the frame of image on the basis of the position information of the mobile robot in the world coordinate system as well as the relative distance between the target object and the mobile robot at the moment of the mobile robot collecting the frame of image. Then the contour information of the target object can be determined on the basis of the corresponding edge positions of all of the frames of images.

The target edge point is an edge point that is located in a shooting range of the camera at the moment of the mobile robot collecting the frame of image. For example, in Figure 2(a), when the mobile robot is located directly below the target object, the determined distance d1 is a distance between the mobile robot and the edge point at the directly low position of the target object, and the edge point is the edge point of the shooting range of the camera, i.e., the mobile robot, at this time.

After each target edge point of the target object is determined, the contour information of the target object can be determined on the basis of the corresponding edge positions of all of the frames of the images.

There are many methods for determining the contour information of the target object on the basis of the corresponding edge positions of all of the frames of the images, and optional methods include at least the following two methods for determining the contour information, including:
a first method for determining the contour information: taking the corresponding edge positions of all of the frames of the images as the contour information of the target object;
in this method, the corresponding edge positions of all of the frames of the images can be directly taken as the contour information of the target object, and the contour information of the target object can be a set of edge positions, in which each determined edge position can be taken as an element in the set of edge positions. For example, the corresponding edge positions of all of the frames of images are position 1, position 2, position 3, position 4, position 5 and position 6, then the contour information of the target object is {position 1, position 2, position 3, position 4, position 5, position 6}.
a second method for determining the contour information: performing a curve fitting on the corresponding edge positions of all of the frames of images to obtain at least one fitting curve, and determining the positions of points on the at least one fitting curve, and taking the determined positions as the contour information of the target object.

Optionally, the above curve fitting method can be least square curve fitting, curve fitting of RBF (radial basis function) and cubic spline curve fitting, etc. After obtaining at least one fitting curve, the positions of all of points on the at least one fitting curve can be taken as the contour information of the target object.

In the above solution provided by the embodiment of the present application, since the obtained multiple frames of images are collected by the mobile robot during it performing a circling motion around the target object, the obtained multiple frames of images are images of the target object in different orientations collected by the mobile robot. And the relative distance between the target object and the mobile robot at a moment of the mobile robot collecting each frame of image is the distance between the contour edge of the target object and the mobile robot at the moment of the mobile robot collecting the frame of image. Then the contour information of the target object can be determined by taking further the position information of the mobile robot in the world coordinate system at the moment of the mobile robot collecting the frame of image into consideration. It can be seen that the contour information of an object in the environment can be determined by means of this solution.

On the basis of the embodiment shown in Figure 1, as shown in Figure 3, a method for determining object information provided by another embodiment of the present application, the above step S102 may include S102A-S102B:
S102A, for each frame of image obtained, determining a pixel distance in a vertical direction between a first pixel point and a second pixel point in the frame of image as a first distance; wherein, the first pixel point is a bottom pixel point of the target object, and the second pixel point is a center pixel point.

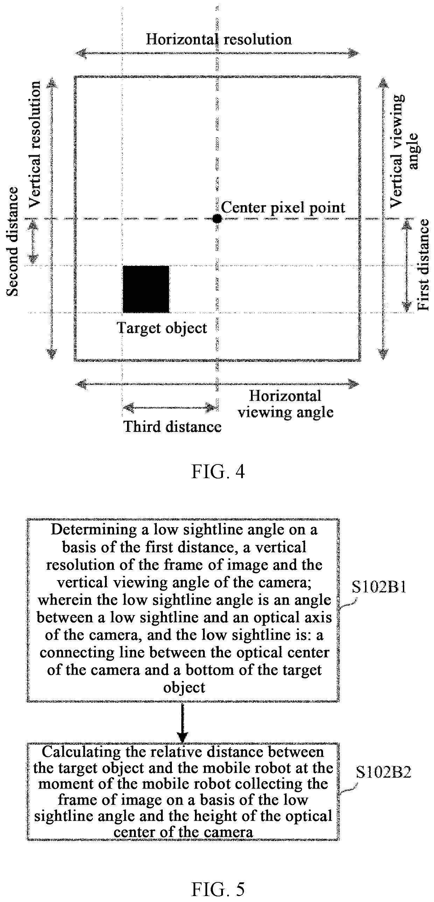

As shown in Figure 4, it is a schematic diagram of an image containing a target object provided by an embodiment of the present application. Wherein the first pixel point can be any pixel point on a bottom line segment of the target object in the image, and the above second pixel point is the center pixel point in the image. Wherein, the bottom pixel point of the target object is a pixel point belonging to the bottom edge of the target object, for example, a pixel point with the smallest ordinate in the pixel coordinates in an imaging area of the target object.

Any pixel point from the bottom line segment of the target object can be firstly selected as the first pixel point, then a first pixel coordinate of the first pixel point can be determined, and then a second pixel coordinate of the second pixel point can be determined. Then, the difference value between an ordinate in the first pixel coordinates and an ordinate in the second pixel coordinates can be calculated, and an absolute value of the difference value can be taken as the first distance. For example, the first pixel coordinate is (x1, y1) and the second pixel coordinate is (x2, y2), then the first distance is the absolute value of y1-y2.

S102B, determining the relative distance between the target object and the mobile robot at the moment of the mobile robot collecting the frame of image on the basis of the first distance and first internal and external parameter information of the camera in the mobile robot.

After the first distance is determined, the relative distance between the target object and the mobile robot at the moment of the mobile robot collecting the frame of image can be determined according to an imaging principle of the camera and a geometric relationship between the camera and the target object during imaging and on the basis of the first distance and the first internal and external parameter information of the camera in the mobile robot.

Optionally, the above first internal and external parameter information may include: a vertical viewing angle of the camera, an image size of an image collected by a camera, and a height of an optical center of a camera.

Wherein, the above vertical viewing angle of the camera refers to the maximum viewing angle of the camera in the vertical direction, for example, 150 degrees.

The above image size can be an image resolution, for example, 1024*768, which means that the image contains 1024 pixel points on a straight line in the horizontal direction and 768 pixel points on a straight line in the vertical direction. Optionally, the image resolution can include a horizontal resolution and a lateral resolution, for example, 1024*768, which means that the horizontal resolution is 1024 and the vertical resolution is 768.

The height of the optical center of the camera is a distance between an optical center of a camera in the mobile robot and a motion plane of the mobile robot.

At this time, as shown in Figure 5, the above step S 102B may include S102B1-S102B2:
S102B1, determining a low sightline angle on the basis of the first distance, a vertical resolution of the frame of image and the vertical viewing angle of the camera; wherein, the low sightline angle is an angle between the low sightline and an optical axis of the camera, and the low sightline is: a connecting line between the optical center of the camera and the bottom of the target object.

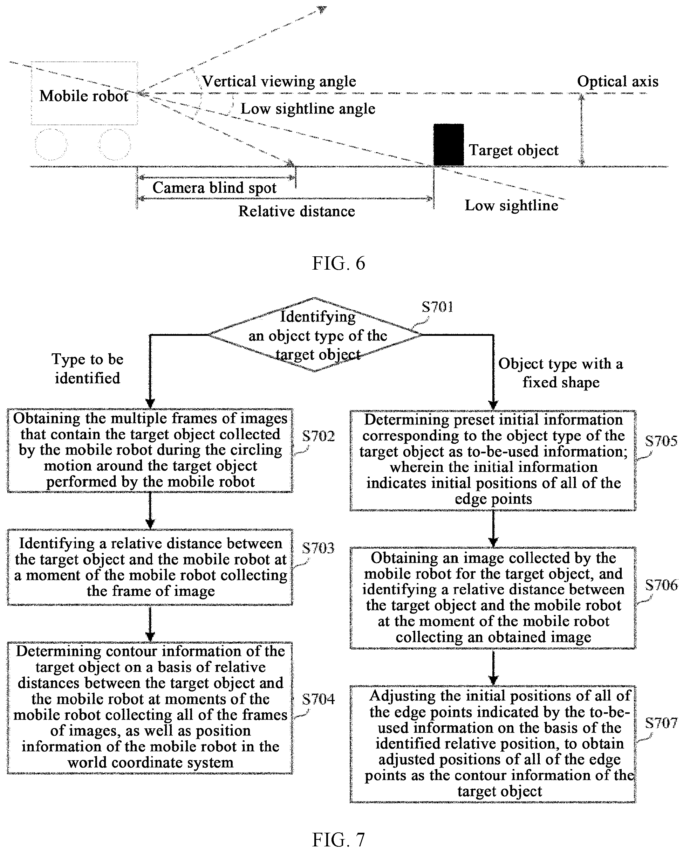

As shown in Figure 6, it is a schematic diagram of a global side view provided by the embodiment of the present application. An angle between the connecting line between the optical center of the camera in the mobile robot and the bottom of the target object, and the optical axis of the camera is the low sightline angle.

In order to calculate the relative distance between the mobile robot and the target object, it is necessary to determine the low sightline angle, so that the trigonometric function can be used to calculate the relative distance between the mobile robot and the target object on the basis of the low sightline angle and the height of the optical center of the camera.

In one implementation, determining the low sightline angle on the basis of the first distance, the vertical resolution of the frame of image and the vertical viewing angle of the camera may include steps A1- A2:
Step A1, calculating a ratio of the first distance to the vertical resolution as a first ratio.

According to Figure 4 and Figure 6, it can be seen that a proportion of the first distance in the vertical direction in the image is positively correlated with a proportion of the vertical viewing angle occupied by the low sightline angle. The larger the proportion of the vertical viewing angle occupied by the low sightline angle, the larger the proportion of the first distance in the vertical direction in the image. Therefore, in order to determine the low sightline angle, the ratio of the first distance to the vertical resolution can be calculated as the first ratio.

Step A2, determining the low sightline angle on the basis of the first ratio and the vertical viewing angle.

Optionally, it can be approximately considered that the proportion of the first distance in the vertical direction in the image is linearly correlated with the proportion of the vertical viewing angle occupied by the low sightline angle. At this time, the product of the first ratio and the vertical viewing angle can be calculated as the low sightline angle. Alternatively, the present application provides another method for determining the low sightline angle, which can, according to a preset corresponding relationship between each pixel point and an adjustment coefficient, determine a target adjustment coefficient corresponding to a specified pixel point in the frame of image, calculate the product of the adjustment coefficient and the first ratio as a second ratio, and calculate the product of the second ratio and the vertical viewing angle as the low sightline angle.

Wherein, each pixel point is a pixel point in the image collected by the camera, and the specified pixel point is a pixel point determined from the bottom pixel points of the target object.

The preset corresponding relationship between each pixel point and the adjustment coefficient can be determined by calibrating the camera in the mobile robot. For each pixel point, the adjustment coefficient corresponding thereto can be a ratio of the distance between the pixel point and the central pixel point to the distance between an actual object corresponding to the pixel point and an actual object corresponding to the central pixel point.

Therefore, when it is necessary to determine the low sightline angle, any pixel point can be selected from the bottom pixel points of the target object as the specified pixel point, and then the adjustment coefficient corresponding to the specified pixel point is taken as the target adjustment coefficient, and then the first ratio corresponding to the target adjustment coefficient is used for adjustment, that is, the product of the adjustment coefficient and the first ratio is calculated as the second ratio, and then the product of the second ratio and the vertical viewing angle is calculated as the low sightline angle.

S102B2, calculating the relative distance between the target object and the mobile robot at the moment of the mobile robot collecting the frame of image on the basis of the low sightline angle and the height of an optical center of a camera.

Optionally, it can be approximately considered that a triangle formed by the light of the camera on the mobile robot and the bottom of the target object is a right triangle. At this time, the relative distance between the target object and the mobile robot at the moment of the mobile robot collecting the frame of image can be calculated by the following formula: $d = tan \left(90+m\right) ∗ h$ wherein, d is the relative distance, and h is the height of the optical center of the camera.

Optionally, in order to accurately calculate the relative distance between the target object and the mobile robot at the moment of the mobile robot collecting the frame of image, a vertical angle between the optical axis and a moving plane of the mobile robot can also be considered. At this time, the relative distance between the target object and the mobile robot at the moment of the mobile robot collecting the frame of image can be calculated by the following formula: $d = tan \left(90+k-m\right) ∗ h$ wherein, d is the relative distance, k is the vertical angle between the optical axis and the moving plane of the mobile robot, m is the low sightline angle, and h is the height of the optical center of the camera.

The vertical angle between the optical axis and the moving plane of the mobile robot can be determined by pre-calibrating.

In the above solution provided by the embodiment of the present application, the contour information of an object in the environment can be determined. Moreover, the low sightline angle can be calculated, and the relative distance between the target object and the mobile robot at the moment of the mobile robot collecting the frame of image can be calculated by using the low sightline angle and the height of the optical center of the camera, thus providing a realization basis for determining the contour information of the object in the environment.

The method for determining object information provided by another embodiment of the present application can identify the object type of the target object before performing step S101, and if the object type of the target object is the type to be identified, then perform step S101. Wherein, the type to be identified includes: an unknown object type or an object type with non-fixed shape.

There are many methods to identify the object type. For example, the object type identification model can be selected by means of training a neural network model, and then after obtaining each frame of image, the object type identification model can be used to process the frame of image, to determine the object type of the target object contained in the frame of image.

The type to be identified includes an unknown object type or an object type with non-fixed shape, wherein the unknown object type is a type of the unidentified object type, and the object type with non-fixed shape is that an object has variable shapes, such as socks, clothes, etc, whose shape are not fixed but variable.

When it is identified that the object type of the target object is the type to be identified, it means that the contour information of the target object requires to be determined, so that step S101 can be performed.

At this time, as shown in Figure 7, the method for determining object information provided by another embodiment of the present application may include steps S701-S707:
S701, identifying an object type of a target object.

For the target object, if the target object is a trash can, shoes and other object types with fixed shape, its contour can basically be obtained by presetting, so that in order to reduce the calculation amount, the contour information of such objects can be determined by presetting. For an unknown object type or an object type with non-fixed shape, the object information of the target object can be determined by the method for determining object information shown in Figure 1.

At this time, after the target object is determined, the object type of the target object can be identified. If the object type of the target object is the type to be identified, step S702 is performed; otherwise, if the object type of the target object is an object type with fixed shape, step S705 is performed.

S702, obtaining multiple frames of images that contain a target object, collected by a mobile robot during a circling motion around the target object performed by the mobile robot.

An implementation of this step is the same as or similar to that of step S101, which can be referred to the related description of step S101, and is not repeated here.

S703, for each frame of image obtained, identifying a relative distance between the target object and the mobile robot at a moment of the mobile robot collecting the frame of image.

An implementation of this step is the same as or similar to that of step S102, which can be referred to the related description of step S102, and is not repeated here.

S704, determining contour information of the target object on the basis of relative distances between the target object and the mobile robot at moments of the mobile robot collecting all of the frames of images, as well as position information of the mobile robot in a world coordinate system.

An implementation of this step is the same as or similar to that of step S103, which can be referred to the related description of step S103, and is not repeated here.

S705, determining preset initial information corresponding to the object type of the target object as to-be-used information; wherein the initial information indicates initial positions of all of the edge points.

If the object type of the target object is an object type with fixed shape, the preset initial information corresponding to the object type of the target object can be determined. The initial information corresponding to each object type may include the initial positions of all of the edge points of the object corresponding to the object type.

S706, obtaining an image collected by the mobile robot for the target object, and identifying a relative distance between the target object and the mobile robot at a moment of the mobile robot collecting an obtained image.

Optionally, only one frame of image collected by the mobile robot for the target object can be obtained in this step, and then the relative distance between the target object and the mobile robot at a moment of the mobile robot collecting the obtained image on the basis of this frame of image. The specific identification method can be similar to step S102, and the specific implementation can be referred to the related description of step S102.

S707, adjusting the initial positions of all of the edge points indicated by the to-be-used information on the basis of the identified relative position, to obtain adjusted positions of all of the edge points as the contour information of the target object.

Since the initial positions of all of the edge points of the target object has been determined, after determining the relative distance between the mobile robot and the target object, the initial positions of all of the edge points indicated by the to-be-used information can be adjusted by using the identified relative position, so as to obtain the adjusted positions of all of the edge points as the contour information of the target object.

In the above solution provided by the embodiment of the present application, the contour information of an object in the environment can be determined. Moreover, when the object type of the target object is an object type with fixed shape, the contour information of the target object can be determined on the basis of the preset initial information without the need for the mobile robot to perform a circling motion around the target object, and the relative positions can be calculated for all of frames of images, so as to simplify the process of determining the object information and improving the efficiency of determining the object information.

After identifying the relative distance between the target object and the mobile robot at a moment of the mobile robot collecting the frame of image, the height of the target object is further determined on the basis of the relative distance between the target object and the mobile robot at a moment of the mobile robot collecting the frame of image, the second distance and second internal and external parameter information of the camera;
wherein, the second distance is a pixel distance in the vertical direction between a top pixel point of the target object in the frame of image and a center pixel point of the frame of image.

As shown in Figure 4, the second distance is a pixel distance in the vertical direction between a top pixel point of the target object and a center pixel point of the frame of image. The top pixel point can be any pixel point on the top line segment of the target object.

Any pixel point from the top line segment of the target object can be selected as the top pixel point, then the top pixel coordinates of the top pixel point can be determined, and then the center pixel coordinates of the center pixel point can be determined. Further, the difference value between an ordinate in the top pixel coordinate and an ordinate in the center pixel coordinate can be calculated, and the absolute value of the difference value can be taken as the second distance. For example, the top pixel coordinate is (x3, y3) and the center pixel coordinate is (x4, y4), then the first distance is the absolute value of y3-y4.

Optionally, the second internal and external parameter information includes: a vertical viewing angle of a camera and a vertical resolution of an image collected by a camera.

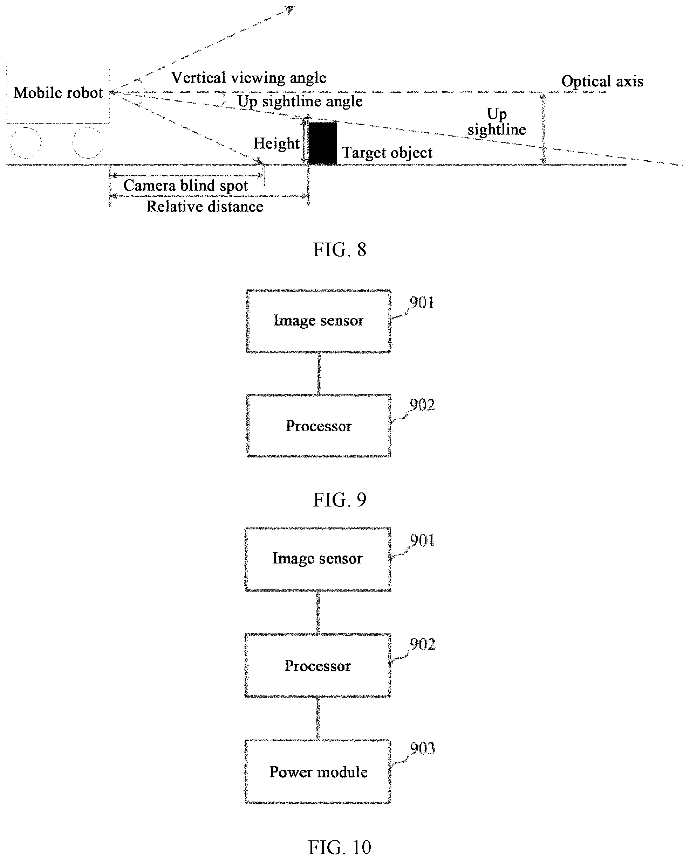

As shown in Figure 8, it is a schematic diagram of another global side view provided by the embodiment of the present application. When the angle between the optical axis and an up sightline is n, there is tan(n) = (h-x)/d, wherein x is the height of the target object, x is the height of the target object. And the angle n = Θ*(dv2_pixels/V), wherein dv2_pixels is the second distance and V is the vertical resolution.

At this time, the following formula can be used to determine the height of the target object: $x = h - tan \left(θ∗\left(\frac{dv 2 _pixels}{V}\right)\right) ∗ d$ wherein x is the height of the target object, Θ is the vertical viewing angle, dv2_pixels is the second distance, V is the vertical resolution, and d is the relative distance between the target object and the mobile robot at a moment of the mobile robot collecting the frame of image.

After calculating the height of the target object, if the height of the target object is less than a preset height, the target object is determined as an object that can be crossed, and if the height of the target object is not less than the preset height, the target object is determined as an object that cannot be crossed and requires to be gone around.

In the above solution provided by the embodiment of the present application, the contour information of an object in the environment can be determined. And the height of the target object can be calculated, so that the object information of the target object is more abundant.

In a method for determining object information provided by another embodiment of the present application, after obtaining multiple frames of images that contain the target object, collected by the mobile robot during a circling motion around the target object performed by the mobile robot, for each frame of image obtained, a horizontal deflection angle between the target object and the mobile robot at a moment of the mobile robot collecting the frame of image can be identified;
wherein, the horizontal deflection angle is a horizontal angle between the horizontal sightline and the optical axis of the camera in the mobile robot, and the horizontal sightline is a connecting line between the optical center of the camera and the outer side of the target object. Optionally, identifying the horizontal deflection angle between the target object and the mobile robot at a moment of the mobile robot collecting the frame of image may include step B1-step B2:
Step B1, determining a pixel distance in the horizontal direction between a third pixel point and a fourth pixel point in the frame of image as a third distance.

Wherein, the third pixel point is an outer sided pixel point about the target object, and the fourth pixel point is a center pixel point. At this time, any pixel point from the outer sided line segment of the target object can be selected as the third pixel point, then third pixel coordinates of the third pixel point can be determined, and then fourth pixel coordinates of the fourth pixel point can be determined. Further, the difference value between an ordinate in the third pixel coordinate and an abscissa in the fourth pixel coordinate can be calculated, and the absolute value of the difference value can be taken as the third distance. For example, the third pixel coordinate is (x5, y5) and the fourth pixel coordinate is (x6, y6), then the third distance is the absolute value of x5-x6.

Step B2, determining the horizontal deflection angle between the target object and the mobile robot at a moment of the mobile robot collecting the frame of image on the basis of the third distance, the horizontal resolution of the frame of image and the horizontal viewing angle of the camera.

Similar to calculating the low sightline angle, the ratio of the third distance to the horizontal resolution can be calculated as a third ratio, and then the horizontal deflection angle between the target object and the mobile robot at a moment of the mobile robot collecting the frame of image can be determined on the basis of the third ratio and the horizontal viewing angle.

In the above solution provided by the embodiment of the present application, the contour information of an object in the environment can be determined. And the horizontal deflection angle can be determined, so that the object information of the target object is more abundant.

Corresponding to the method for determining object information provided by the above embodiment of the present application, as shown in Figure 9, the embodiment of the present application further provides a mobile robot system, which includes:
an image sensor 901, configured to obtain multiple frames of images that contain a target object collected by a mobile robot during a circling motion around the target object performed by the mobile robot;
a processor 902, configured, for each frame of image obtained, to identify a relative distance between the target object and the mobile robot at a moment of the mobile robot collecting the frame of image; and configured to determine contour information of the target object on the basis of relative distances between the target object and the mobile robot at moments of the mobile robot collecting all of the frames of images, as well as position information of the mobile robot in the world coordinate system.

It should be noted that the image sensor 901 may be a camera, such as a monocular camera, a structured light depth camera, a binocular camera, a TOF depth camera, a binocular stereo vision camera, etc.

Optionally, for each frame of image obtained, identifying a relative distance between the target object and the mobile robot at a moment of the mobile robot collecting the frame of image performed by the processor 902, may include:
for each frame of image obtained, determining a pixel distance in the vertical direction between a first pixel point and a second pixel point in the frame of image as a first distance; wherein the first pixel point is a bottom pixel point of the target object, and the second pixel point is a center pixel point;
determining the relative distance between the target object and the mobile robot at the moment of the mobile robot collecting the frame of image on the basis of the first distance and first internal and external parameter information of the camera in the mobile robot.

Optionally, the first internal and external parameter information includes: a vertical viewing angle of the camera, an image size of the frame of image collected by the camera and the height of the optical center of the camera.

Determining the relative distance between the target object and the mobile robot at the moment of the mobile robot collecting the frame of image on the basis of the first distance and first internal and external parameter information of the camera in the mobile robot performed by the processor 902, may include:
determining a low sightline angle on the basis of the first distance, a vertical resolution of the frame of image and the vertical viewing angle of the camera; wherein the low sightline angle is an angle between the low sightline and an optical axis of the camera, and the low sightline is: a connecting line between the optical center of the camera and a bottom of the target object;
calculating the relative distance between the target object and the mobile robot at the moment of the mobile robot collecting the frame of image on the basis of the low sightline angle and the height of the optical center of the camera.

Optionally, determining the low sightline angle on the basis of the first distance, a vertical resolution of the frame of image and the vertical viewing angle of the camera performed by the processor 902, may include:
calculating a ratio of the first distance to the vertical resolution as a first ratio;
determining the low sightline angle on the basis of the first ratio and the vertical viewing angle.

Optionally, determining the low sightline angle on the basis of the first ratio and the vertical viewing angle performed by the processor 902, may include:
calculating the product of the first ratio and the vertical viewing angle as the low sightline angle; or,
determining a target adjustment coefficient corresponding to a specified pixel point in the frame of image according to a preset corresponding relationship between individual pixel point and an adjustment coefficient, and calculating the product of the adjustment coefficient and the first ratio as a second ratio, and calculating the product of the second ratio and the vertical viewing angle as the low sightline angle; wherein each pixel point is a pixel point in the image collected by the camera, and the specified pixel point is a pixel point determined from bottom pixel points of the target object.

Optionally, calculating the relative distance between the target object and the mobile robot at the moment of the mobile robot collecting the frame of image on the basis of the low sightline angle and the height of the optical center of the camera performed by the processor 902, may include:
calculating the relative distance between the target object and the mobile robot at the moment of the mobile robot collecting the frame of image by using the following formula: $d = tan \left(90+k-m\right) ∗ h$
wherein, d is the relative distance, k is the vertical angle between the optical axis and a moving plane of the mobile robot, m is the low sightline angle, and h is the height of the optical center of the camera.

Optionally, determining contour information of the target object on the basis of the relative distances between the target object and the mobile robot at moments of the mobile robot collecting all of the frames of images, as well as position information of the mobile robot in the world coordinate system performed by the processor 902, may include:
for each frame of image, determining a position of a target edge point of the target object as an edge position corresponding to the frame of image on the basis of the position information of the mobile robot in the world coordinate system, as well as the relative distance between the target object and the mobile robot at the moment of the mobile robot collecting the frame of image; wherein the target edge point is an edge point located in a shooting range of the camera at the moment of the mobile robot collecting the frame of image;
determining the contour information of the target object on the basis of the edge positions corresponding to all of the frames of the images.

Optionally, determining the contour information of the target object on the basis of the edge positions corresponding to all of the frames of images performed by the processor 902, may include:
taking the edge positions corresponding to all of the frames of the images as the contour information of the target object; or,
performing a curve fitting on the edge positions corresponding to all of the frames of the images, to obtain at least one fitting curve, and determining positions of points on the at least one fitting curve, and taking the determined positions as the contour information of the target object.

Optionally, the processor 902 can further identify an object type of the target object before obtaining multiple frames of images that contain a target object collected by a mobile robot during a circling motion around the target object performed by the mobile robot; if the object type of the target object is the type to be identified, then obtain multiple frames of images that contain a target object collected by a mobile robot during a circling motion around the target object performed by the mobile robot; wherein, the type to be identified includes an unknown object type or an object type with non-fixed shape.

Optionally, the processor 902 is further to determine preset initial information corresponding to the object type of the target object as to-be-used information if the object type of the target object is an object type with fixed shape; wherein the initial information indicates initial positions of all of the edge points; to obtain an image collected by the mobile robot for the target object, and to identify a relative distance between the target object and the mobile robot at the moment of the mobile robot collecting an obtained image; to adjust the initial positions of all of the edge points indicated by the to-be-used information on the basis of the identified relative position, to obtain adjusted positions of all of the edge points as the contour information of the target object.

Optionally, a manner for a circling motion around the target object performed by the mobile robot includes:
performing, by the mobile robot, a continuous circular motion around the target object in a case that a camera orientation of the mobile robot is independent of a moving direction of the mobile robot; or,
performing, by the mobile robot, a multi-segment arc motion around the target object in a case that the camera orientation of the mobile robot is dependent on a moving direction of the mobile robot.

Optionally, after identifying the relative distance between the target object and the mobile robot at a moment of the mobile robot collecting the frame of image, the processor 902 is further to determine the height of the target object on the basis of the relative distance between the target object and the mobile robot at a moment of the mobile robot collecting the frame of image, the second distance and second internal and external parameter information of the camera; wherein, the second distance is a pixel distance in the vertical direction between a top pixel point of the target object in the frame of image and a center pixel point of the frame of image.

Optionally, the second internal and external parameter information includes a vertical viewing angle of the camera and a vertical resolution of an image collected by the camera.

Determining the height of the target object on the basis of the relative distance between the target object and the mobile robot at a moment of the mobile robot collecting the frame of image, the second distance and the second internal and external parameter information of the camera performed by the processor 902, may include:
determining the height of the target object by the following formula: $x = h - tan \left(θ∗\left(\frac{dv 2 _pixels}{V}\right)\right) ∗ d$
wherein, x is the height of the target object, Θ is the vertical viewing angle, dv2_pixels is the second distance, V is the vertical resolution, and d is the relative distance between the target object and the mobile robot at a moment of the mobile robot collecting the frame of image.

Optionally, after obtaining multiple frames of images that contain a target object collected by the mobile robot during a circling motion around the target object performed by the mobile robot, the processor 902 is further to, for each frame of the image obtained, identify a horizontal deflection angle between the target object and the mobile robot at a moment of the mobile robot collecting the frame of image; wherein, the horizontal deflection angle is a horizontal angle between a horizontal sightline and an optical axis of the camera in the mobile robot, and the horizontal sightline is a connecting line between an optical center of the camera and an outer side of the target object.

Optionally, as shown in Figure 10, on the basis of the embodiment shown in Figure 9, the embodiment of the present application further provides a mobile robot system, further including:
a power module 903, configured to drive the mobile robot to perform a circling motion around the target object.

The power module 903 can be a moving component carried by a mobile robot, and may include components such as motors and tires.

Optionally, in a case that the camera orientation of the mobile robot is independent of a moving direction of the mobile robot, the above-mentioned power module 903 can drive the mobile robot to perform a continuous circular motion around the target object; or, in a case that a camera orientation of the mobile robot is dependent on a moving direction of the mobile robot, the power module 903 can drive the mobile robot to perform a multi-segment arc motion around the target object.

In the above solution provided by the embodiment of the present application, since the obtained multiple frames of image are collected by the mobile robot during it performing a circling motion around the target object, the obtained multiple frames of image are images of the target object in different orientations collected by the mobile robot. And the relative distance between the target object and the mobile robot at a moment of the mobile robot collecting each frame of image is a distance between a contour edge of the target object and the mobile robot at a moment of the mobile robot collecting the frame of image, so that the contour information of the target object can be determined by taking further the position information of the mobile robot in the world coordinate system at the moment of the mobile robot collecting the frame of image into consideration. It can be seen that the contour information of an object in the environment can be determined through this solution.

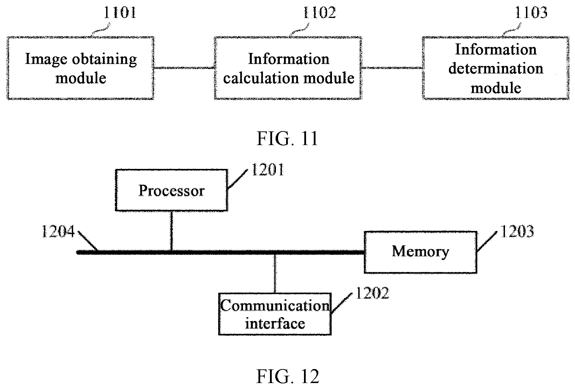

Corresponding to the method for determining object information provided by the above embodiment of the present application, as shown in Figure 11, the embodiment of the present application further provides an apparatus for determining object information, including:
an image obtaining module 1101, configured to obtain multiple frames of images that contain a target object collected by a mobile robot during a circling motion around the target object performed by the mobile robot;
an information calculation module 1102, configured, for each frame of image obtained, to identify a relative distance between the target object and the mobile robot at a moment of the mobile robot collecting the frame of image;
an information determination module 1103, configured to determine contour information of the target object on the basis of relative distances between the target object and the mobile robot at moments of the mobile robot collecting all of the frames of images, as well as position information of the mobile robot in the world coordinate system.

Optionally, the information calculation module includes:
a first sub-module, configured, for each frame of image obtained, to determine a pixel distance in the vertical direction between a first pixel point and a second pixel point in the frame of image as a first distance; wherein the first pixel point is a bottom pixel point of the target object, and the second pixel point is a center pixel point;
a second sub-module, configured to determine the relative distance between the target object and the mobile robot at the moment of the mobile robot collecting the frame of image on the basis of the first distance and first internal and external parameter information of the camera in the mobile robot.

Optionally, the first internal and external parameter information includes: a vertical viewing angle of the camera, an image size of the image collected by the camera and a height of the optical center of the camera.

The second sub-module includes:
an angle determination unit, configured to determine a low sightline angle on the basis of the first distance, a vertical resolution of the frame of image and the vertical viewing angle of the camera; wherein the low sightline angle is an angle between the low sightline and an optical axis of the camera, and the low sightline is: a connecting line between the optical center of the camera and a bottom of the target object;
a distance determination unit, configured to calculate the relative distance between the target object and the mobile robot at the moment of the mobile robot collecting the frame of image on the basis of the low sightline angle and the height of the optical center of the camera.

Optionally, the angle determination unit includes:
a ratio calculation sub-unit, configured to calculate a ratio of the first distance to the vertical resolution as a first ratio;
an angle determination sub-unit, configured to determine the low sightline angle on the basis of the first ratio and the vertical viewing angle.

Optionally, the angle determination sub-unit is specifically configured to calculate the product of the first ratio and the vertical viewing angle as the low sightline angle; or, to determine a target adjustment coefficient corresponding to a specified pixel point in the frame of image according to a preset corresponding relationship between each pixel point and an adjustment coefficient, and to calculate the product of the adjustment coefficient and the first ratio as a second ratio, and to calculate the product of the second ratio and the vertical viewing angle as the low sightline angle; wherein each pixel point is a pixel point in the image collected by the camera, and the specified pixel point is a pixel point determined from the bottom pixel points of the target object.

Optionally, the distance determination unit is specifically configured to calculate the relative distance between the target object and the mobile robot at the moment of the mobile robot collecting the frame of image by using the following formula: $d = tan \left(90+k-m\right) ∗ h$ wherein, d is the relative distance, k is the vertical angle between the optical axis and a moving plane of the mobile robot, m is the low sightline angle, and h is the height of the optical center of the camera.

Optionally, the information determination module includes:
a position determination sub-module, configured, for each frame of image, to determine position of a target edge point of the target object as an edge position corresponding to the frame of image on the basis of the position information of the mobile robot in the world coordinate system, as well as the relative distance between the target object and the mobile robot at the moment of the mobile robot collecting the frame of image; wherein the target edge point is an edge point located in a shooting range of the camera at the moment of the mobile robot collecting the frame of image;
an information determination sub-module, configured to determine the contour information of the target object on the basis of the edge positions corresponding to all of the frames of the images.

Optionally, the information determination sub-module is specifically configured to take the edge positions corresponding to all of the frames of the images as the contour information of the target object; or, to perform a curve fitting on the edge positions corresponding to all of the frames of the images, to obtain at least one fitting curve, and determine positions of points on the at least one fitting curve, and take the determined positions as the contour information of the target object.

Optionally, the apparatus further includes a type identification module, configured to identify an object type of the target object before obtaining multiple frames of images that contain a target object collected by a mobile robot during a circling motion around the target object performed by the mobile robot; if the object type of the target object is a type to be identified, then to obtain multiple frames of images that contain a target object collected by a mobile robot during a circling motion around the target object performed by the mobile robot; wherein, the type to be identified includes an unknown object type or an object type with non-fixed shape.

Optionally, the type identification module, is further configured: if the object type of the target object is an object type with fixed shape, to determine preset initial information corresponding to the object type of the target object as to-be-used information; to obtain an image collected by the mobile robot for the target object, and to identify a relative distance between the target object and the mobile robot at the moment of the mobile robot collecting an obtained image; to adjust the initial positions of all of the edge points indicated by the to-be-used information on the basis of the identified relative position, to obtain adjusted positions of all of the edge points as the contour information of the target object; wherein the initial information indicates initial positions of all of the edge points.

Optionally, a manner for a circling motion around the target object performed by the mobile robot includes: performing, by the mobile robot, a continuous circular motion around the target object in a case that a camera orientation of the mobile robot is independent of a moving direction of the mobile robot; or, performing, by the mobile robot, a multi-segment arc motion around the target object in a case that the camera orientation of the mobile robot is dependent on a moving direction of the mobile robot.

Optionally, the information calculation module is further configured to determine the height of the target object on the basis of the relative distance between the target object and the mobile robot at a moment of the mobile robot collecting the frame of image, the second distance and second internal and external parameter information of the camera after identifying the relative distance between the target object and the mobile robot at a moment of the mobile robot collecting the frame of image; wherein, the second distance is a pixel distance in the vertical direction between a top pixel point of the target object in the frame of image and a center pixel point of the frame of image.

Optionally, the second internal and external parameter information includes: a vertical viewing angle of the camera and a vertical resolution of an image collected by the camera.

The information calculation module includes:
a height calculation sub-module, configured to determine the height of the target object by using the following formula: $x = h - tan \left(θ∗\left(\frac{dv 2 _pixels}{V}\right)\right) ∗ d$
wherein, x is the height of the target object, Θ is the vertical viewing angle, dv2_pixels is the second distance, V is the vertical resolution, and d is the relative distance between the target object and the mobile robot at a moment of the mobile robot collecting the frame of image.

Optionally, an angle identification module is configured, for each frame of the image obtained, to identify a horizontal deflection angle between the target object and the mobile robot at a moment of the mobile robot collecting the frame of image after obtaining multiple frames of images that contain a target object collected by the mobile robot during a circling motion around the target object performed by the mobile robot; wherein, the horizontal deflection angle is a horizontal angle between a horizontal sightline and an optical axis of the camera in the mobile robot, and the horizontal sightline is a connecting line between an optical center of the camera and an outer side of the target object.

Optionally, the angle identification module includes:
a distance determination sub-module, configured to determine a pixel distance in the horizontal direction between a third pixel point and a fourth pixel point in the frame of image as a third distance; wherein the third pixel point is an outer sided pixel point about the target object, and the fourth pixel point is a center pixel point;
an angle determination sub-module, configured to determine a horizontal deflection angle between the target object and the mobile robot at a moment of the mobile robot collecting the frame of image on the basis of the third distance, the horizontal resolution of the frame of image and the horizontal viewing angle of the camera.

Optionally, the angle determination sub-module is configured specifically to calculate a ratio of the third distance to the horizontal resolution as a third ratio; to determine the horizontal deflection angle between the target object and the mobile robot at a moment of the mobile robot collecting the frame of image on the basis of the third ratio and the horizontal viewing angle.

In the above solution provided by the embodiment of the present application, since the obtained multiple frames of image are collected by the mobile robot during it performing a circling motion around the target object, the obtained multiple frames of images are images of the target object in different orientations collected by the mobile robot. And the relative distance between the target object and the mobile robot at a moment of the mobile robot collecting each frame of image is a distance between a contour edge of the target object and the mobile robot at a moment of the mobile robot collecting the frame of image. The contour information of the target object can be determined by taking further the position information of the mobile robot in the world coordinate system at the moment of the mobile robot collecting the frame of image into consideration. It can be seen that the contour information of an object in the environment can be determined through this solution.

An embodiment of the present application also provides an electronic device, as shown in Figure 12, which includes a processor 1201, a communication interface 1202, a memory 1203 and a communication bus 1204, wherein the processor 1201, the communication interface 1202 and the memory 1203 communicate with each other through the communication bus 1204,
the memory 1203 is configured to store a computer program;
the processor 1201 is configured to implement the steps of the method for determining object information provided by the above embodiments of the present application when executing the program stored in the memory 1203.

The communication bus mentioned in the above-mentioned electronic device may be a Peripheral Component Interconnect (PCI) bus or an Extended Industry Standard Architecture (EISA) bus, and the like. The communication bus can be divided into an address bus, a data bus, a control bus, and the like. For ease of presentation, only one thick line is used in the figure, but it does not mean that there is only one bus or one type of bus.

The communication interface is for communication between the above electronic device and other devices.

The memory may include a Random Access Memory (RAM), and may also include a Non-Volatile Memory (NVM), such as at least one magnetic disk memory. Optionally, the memory may also be at least one storage device located away from the aforementioned processor.

The above-mentioned processor may be a general-purpose processor, including a Central Processing unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gate or transistor logic devices, discrete hardware components.

In yet another embodiment provided by the present application, a computer-readable storage medium is further provided, which stores a computer program that, when executed by a processor, implements the steps of any one of the methods for determining object information.

In yet another embodiment provided by the present application, a computer program product including instructions is further provided, which, when running on a computer, causes the computer to implement any one of the methods for determining object information in the above-mentioned embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or semiconductor media (such as Solid State Disk (SSD)) and the like.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "comprising one..." do not preclude the presence of additional identical elements in a process, method, article or device that includes the mentioned elements.

The various embodiments in this specification are described in a related manner. Each embodiment focuses on the differences from other embodiments, and the same and similar parts between the various embodiments can be referred to each other. Especially, for the embodiment of the mobile robot system, an apparatus, an electronic device, a computer-readable storage medium and a computer program product, the description is relatively simple because it is basically similar to the embodiment of the method, and the relevant points can be referred to the partial description of the embodiment of the method.

## Claims

1. A method for determining object information, which comprises:
obtaining (S101, S702) multiple frames of images that contain a target object collected by a mobile robot during a circling motion around the target object performed by the mobile robot, wherein the multiple frames of images are images of the target object in different orientations collected by the mobile robot, wherein the multiple frames of images are collected by a monocular camera in the mobile robot;
for each frame of image obtained, identifying (S102, S703) a relative distance between the target object and the mobile robot at a moment of the mobile robot collecting the frame of image;
determining (S103, S704) contour information of the target object on a basis of relative distances between the target object and the mobile robot at moments of the mobile robot collecting all of the frames of images, as well as position information of the mobile robot in the world coordinate system,
wherein after identifying the relative distance between the target object and the mobile robot at the moment of the mobile robot collecting the frame of image, the method further comprises:
determining a height of the target object on a basis of the relative distance between the target object and the mobile robot at the moment of the mobile robot collecting the frame of image, a second distance and second internal and external parameter information of the camera in the mobile robot;
wherein, the second distance is a pixel distance in the vertical direction between a top pixel point of the target object in the frame of image and a center pixel point of the frame of image.

2. The method according to claim 1, wherein for each frame of image obtained, identifying (S102) a relative distance between the target object and the mobile robot at a moment of the mobile robot collecting the frame of image, comprises:
for each frame of image obtained, determining (S102A) a pixel distance in a vertical direction between a first pixel point and a second pixel point in the frame of image as a first distance; wherein the first pixel point is a bottom pixel point of the target object, and the second pixel point is a center pixel point;
determining (S102B) the relative distance between the target object and the mobile robot at the moment of the mobile robot collecting the frame of image on a basis of the first distance and first internal and external parameter information of the camera in the mobile robot.

3. The method according to claim 2, wherein the first internal and external parameter information comprises: a vertical viewing angle of the camera, an image size of the frame of image collected by the camera and a height of an optical center of the camera;
determining (S102B) the relative distance between the target object and the mobile robot at the moment of the mobile robot collecting the frame of image on the basis of the first distance and the first internal and external parameter information of the camera in the mobile robot, comprises:
determining (S102B1) a low sightline angle on a basis of the first distance, a vertical resolution of the frame of image and the vertical viewing angle of the camera; wherein the low sightline angle is an angle between a low sightline and an optical axis of the camera, and the low sightline is: a connecting line between the optical center of the camera and a bottom of the target object;
calculating (S102B2) the relative distance between the target object and the mobile robot at the moment of the mobile robot collecting the frame of image on a basis of the low sightline angle and the height of the optical center of the camera.

4. The method according to claim 3, wherein determining (S102B1) the low sightline angle on the basis of the first distance, the vertical resolution of the frame of image and the vertical viewing angle of the camera, comprises:
calculating (A1) a ratio of the first distance to the vertical resolution as a first ratio;
determining (A2) the low sightline angle on a basis of the first ratio and the vertical viewing angle.

5. The method according to claim 4, wherein determining (A2) the low sightline angle on the basis of the first ratio and the vertical viewing angle, comprises:
calculating a product of the first ratio and the vertical viewing angle as the low sightline angle; or,
determining a target adjustment coefficient corresponding to a specified pixel point in the frame of image according to a preset corresponding relationship between each pixel point and an adjustment coefficient, and calculating a product of the adjustment coefficient and the first ratio as a second ratio, and calculating a product of the second ratio and the vertical viewing angle as the low sightline angle; wherein each pixel point is a pixel point in the image collected by the camera, and the specified pixel point is a pixel point determined from bottom pixel points of the target object.

6. The method according to claim 3, wherein calculating the relative distance between the target object and the mobile robot at the moment of the mobile robot collecting the frame of image on the basis of the low sightline angle and the height of the optical center of the camera, comprises:
calculating the relative distance between the target object and the mobile robot at the moment of the mobile robot collecting the frame of image by using the following formula: $d = tan \left(90+k-m\right) ∗ h$
wherein, d is the relative distance, k is a vertical angle between the optical axis and a moving plane of the mobile robot, m is the low sightline angle, and h is the height of the optical center of the camera.

7. The method according to any one of claims 1 to 6, wherein determining the contour information of the target object on the basis of the relative distances between the target object and the mobile robot at the moments of the mobile robot collecting all of the frames of images, as well as the position information of the mobile robot in the world coordinate system, comprises:
for each of the frames of images, determining a position of a target edge point of the target object as an edge position corresponding to the frame of image on a basis of the position information of the mobile robot in the world coordinate system, as well as the relative distance between the target object and the mobile robot at the moment of the mobile robot collecting the frame of image; wherein the target edge point is an edge point located in a shooting range of the camera at the moment of the mobile robot collecting the frame of image;
determining the contour information of the target object on a basis of edge positions corresponding to all of the frames of the images.

8. The method according to claim 7, wherein determining the contour information of the target object on the basis of the edge positions corresponding to all of the frames of the images, comprises:
taking the edge positions corresponding to all of the frames of the images as the contour information of the target object; or,
performing a curve fitting on the edge positions corresponding to all of the frames of the images, to obtain at least one fitting curve, and determining positions of points on the at least one fitting curve, and taking determined positions as the contour information of the target object.

9. The method according to any one of claims 1 to 6, wherein before obtaining the multiple frames of images that contain the target object collected by the mobile robot during the circling motion around the target object performed by the mobile robot, the method further comprises:
identifying (S701) an object type of the target object;
if the object type of the target object is a type to be identified, obtaining the multiple frames of images that contain the target object collected by the mobile robot during the circling motion around the target object performed by the mobile robot; wherein, the type to be identified comprises an unknown object type or an object type with a non-fixed shape.

10. The method according to claim 9, wherein the method further comprises:
if the object type of the target object is an object type with a fixed shape, determining (S705) preset initial information corresponding to the object type of the target object as to-be-used information; wherein the initial information indicates initial positions of all of the edge points;
obtaining (S706) an image collected by the mobile robot for the target object, and identifying a relative distance between the target object and the mobile robot at the moment of the mobile robot collecting an obtained image;
adjusting (S707) the initial positions of all of the edge points indicated by the to-be-used information on the basis of the identified relative distance, to obtain adjusted positions of all of the edge points as the contour information of the target object.

11. The method according to any one of claims 1 to 6, wherein a manner for a circling motion around the target object performed by the mobile robot comprises:
performing, by the mobile robot, a continuous circular motion around the target object in a case that the camera orientation of the mobile robot is independent of a moving direction of the mobile robot; or,
performing, by the mobile robot, a multi-segment arc motion around the target object in a case that the camera orientation of the mobile robot is dependent on a moving direction of the mobile robot.

12. The method according to claim 1, wherein the second internal and external parameter information comprises: a vertical viewing angle of the camera and a vertical resolution of an image collected by the camera;
determining the height of the target object on the basis of the relative distance between the target object and the mobile robot at the moment of the mobile robot collecting the frame of image, the second distance and the second internal and external parameter information of the camera, comprises:
determining the height of the target object by the following formula: $x = h - tan \left(θ∗\left(\frac{dv 2 _pixels}{V}\right)\right) ∗ d$
wherein, x is the height of the target object, Θ is the vertical viewing angle, dv2_pixels is the second distance, V is the vertical resolution, and d is the relative distance between the target object and the mobile robot at the moment of the mobile robot collecting the frame of image.

13. The method according to any one of claims 1 to 6, wherein after obtaining the multiple frames of images that contain the target object collected by the mobile robot during the circling motion around the target object performed the mobile robot, the method further comprises:
for each of the frames of the images obtained, identifying a horizontal deflection angle between the target object and the mobile robot at the moment of the mobile robot collecting the frame of image; wherein, the horizontal deflection angle is a horizontal angle between a horizontal sightline and the optical axis of the camera in the mobile robot, and the horizontal sightline is a connecting line between the optical center of the camera and an outer side of the target object.

14. An electronic device, which comprises a processor (1201), a communication interface (1202), a memory (1203) and a communication bus (1204), wherein the processor (1201), the communication interface (1202) and the memory (1203) communicate with each other through the communication bus (1204);
a memory (1203) is configured to store a computer program;
a processor (1201) is configured to carry out the method steps according to any one of claims 1 to 13 when executing the program stored on the memory (1203).

15. A computer-readable storage medium, which stores a computer program thereon which, when executed by a processor, causes the processor to carry out the method steps according to any one of claims 1 to 13.

## Patentansprüche

1. Verfahren zum Bestimmen von Objektinformationen, umfassend:
Erhalten (S101, S702) mehrerer Einzelbilder, die ein Zielobjekt enthalten und durch einen mobilen Roboter während einer von dem mobilen Roboter ausgeführten Umkreisungsbewegung um das Zielobjekt erfasst werden, wobei die mehreren Einzelbilder Bilder des Zielobjekts in unterschiedlichen Ausrichtungen sind, die durch den mobilen Roboter erfasst werden, wobei die mehreren Einzelbilder durch eine monokulare Kamera in dem mobilen Roboter erfasst werden;
für jedes erhaltene Einzelbild Identifizieren (S102, S703) eines relativen Abstands zwischen dem Zielobjekt und dem mobilen Roboter zu einem Zeitpunkt, zu dem der mobile Roboter das Einzelbild erfasst;
Bestimmen (S103, S704) von Konturinformationen des Zielobjekts auf der Grundlage relativer Abstände zwischen dem Zielobjekt und dem mobilen Roboter zu Zeitpunkten, zu denen der mobile Roboter sämtliche Einzelbilder erfasst, sowie von Positionsinformationen des mobilen Roboters in dem Weltkoordinatensystem,
wobei das Verfahren nach dem Identifizieren des relativen Abstands zwischen dem Zielobjekt und dem mobilen Roboter zu dem Zeitpunkt, zu dem der mobile Roboter das Einzelbild erfasst, ferner umfasst:
Bestimmen einer Höhe des Zielobjekts auf der Grundlage des relativen Abstands zwischen dem Zielobjekt und dem mobilen Roboter zu dem Zeitpunkt, zu dem der mobile Roboter das Einzelbild erfasst, eines zweiten Abstands und zweiter interner und externer Parameterinformationen der Kamera in dem mobilen Roboter;
wobei der zweite Abstand ein Pixelabstand in vertikaler Richtung zwischen einem obersten Pixelpunkt des Zielobjekts in dem Einzelbild und einem mittleren Pixelpunkt des Einzelbilds ist.

2. Verfahren nach Anspruch 1, wobei für jedes erhaltene Einzelbild das Identifizieren (S102) eines relativen Abstands zwischen dem Zielobjekt und dem mobilen Roboter zu einem Zeitpunkt, zu dem der mobile Roboter das Einzelbild erfasst, umfasst:
für jedes erhaltene Einzelbild Bestimmen (S102A) eines Pixelabstands in vertikaler Richtung zwischen einem ersten Pixelpunkt und einem zweiten Pixelpunkt in dem Einzelbild als einen ersten Abstand; wobei der erste Pixelpunkt ein unterster Pixelpunkt des Zielobjekts ist und der zweite Pixelpunkt ein mittlerer Pixelpunkt ist;
Bestimmen (S102B) des relativen Abstands zwischen dem Zielobjekt und dem mobilen Roboter zu dem Zeitpunkt, zu dem der mobile Roboter das Einzelbild erfasst, auf der Grundlage des ersten Abstands und erster interner und externer Parameterinformationen der Kamera in dem mobilen Roboter.

3. Verfahren nach Anspruch 2, wobei die ersten internen und externen Parameterinformationen umfassen: einen vertikalen Blickwinkel der Kamera, eine Bildgröße des durch die Kamera erfassten Einzelbilds und eine Höhe eines optischen Zentrums der Kamera;
wobei das Bestimmen (S102B) des relativen Abstands zwischen dem Zielobjekt und dem mobilen Roboter zu dem Zeitpunkt, zu dem der mobile Roboter das Einzelbild erfasst, auf der Grundlage des ersten Abstands und der ersten internen und externen Parameterinformationen der Kamera in dem mobilen Roboter umfasst:
Bestimmen (S102B1) eines unteren Sichtlinienwinkels auf der Grundlage des ersten Abstands, einer vertikalen Auflösung des Einzelbilds und des vertikalen Blickwinkels der Kamera; wobei der untere Sichtlinienwinkel ein Winkel zwischen einer unteren Sichtlinie und einer optischen Achse der Kamera ist und die untere Sichtlinie eine Verbindungslinie zwischen dem optischen Zentrum der Kamera und einer Unterseite des Zielobjekts ist;
Berechnen (S102B2) des relativen Abstands zwischen dem Zielobjekt und dem mobilen Roboter zu dem Zeitpunkt, zu dem der mobile Roboter das Einzelbild erfasst, auf der Grundlage des unteren Sichtlinienwinkels und der Höhe des optischen Zentrums der Kamera.

4. Verfahren nach Anspruch 3, wobei das Bestimmen (S102B1) des unteren Sichtlinienwinkels auf der Grundlage des ersten Abstands, der vertikalen Auflösung des Einzelbilds und des vertikalen Blickwinkels der Kamera umfasst:
Berechnen (A1) eines Verhältnisses des ersten Abstands zu der vertikalen Auflösung als ein erstes Verhältnis;
Bestimmen (A2) des unteren Sichtlinienwinkels auf der Grundlage des ersten Verhältnisses und des vertikalen Blickwinkels.

5. Verfahren nach Anspruch 4, wobei das Bestimmen (A2) des unteren Sichtlinienwinkels auf der Grundlage des ersten Verhältnisses und des vertikalen Blickwinkels umfasst:
Berechnen eines Produkts aus dem ersten Verhältnis und dem vertikalen Blickwinkel als den unteren Sichtlinienwinkel; oder
Bestimmen eines einem festgelegten Pixelpunkt in dem Einzelbild entsprechenden Zielanpassungskoeffizienten gemäß einer voreingestellten Entsprechungsbeziehung zwischen jedem Pixelpunkt und einem Anpassungskoeffizienten, Berechnen eines Produkts aus dem Anpassungskoeffizienten und dem ersten Verhältnis als ein zweites Verhältnis und Berechnen eines Produkts aus dem zweiten Verhältnis und dem vertikalen Blickwinkel als den unteren Sichtlinienwinkel; wobei jeder Pixelpunkt ein Pixelpunkt in dem durch die Kamera erfassten Bild ist und der festgelegte Pixelpunkt ein aus untersten Pixelpunkten des Zielobjekts bestimmter Pixelpunkt ist.

6. Verfahren nach Anspruch 3, wobei das Berechnen des relativen Abstands zwischen dem Zielobjekt und dem mobilen Roboter zu dem Zeitpunkt, zu dem der mobile Roboter das Einzelbild erfasst, auf der Grundlage des unteren Sichtlinienwinkels und der Höhe des optischen Zentrums der Kamera umfasst:
Berechnen des relativen Abstands zwischen dem Zielobjekt und dem mobilen Roboter zu dem Zeitpunkt, zu dem der mobile Roboter das Einzelbild erfasst, unter Verwendung der folgenden Formel: $d = tan \left(90+k-m\right) ∗ h$
wobei d der relative Abstand ist, k ein vertikaler Winkel zwischen der optischen Achse und einer Bewegungsebene des mobilen Roboters ist, m der untere Sichtlinienwinkel ist und h die Höhe des optischen Zentrums der Kamera ist.

7. Verfahren nach einem der Ansprüche 1 bis 6, wobei das Bestimmen der Konturinformationen des Zielobjekts auf der Grundlage der relativen Abstände zwischen dem Zielobjekt und dem mobilen Roboter zu den Zeitpunkten, zu denen der mobile Roboter sämtliche Einzelbilder erfasst, sowie der Positionsinformationen des mobilen Roboters in dem Weltkoordinatensystem umfasst:
für jedes der Einzelbilder Bestimmen einer Position eines Zielrandpunkts des Zielobjekts als eine dem Einzelbild entsprechende Randposition auf der Grundlage der Positionsinformationen des mobilen Roboters in dem Weltkoordinatensystem sowie des relativen Abstands zwischen dem Zielobjekt und dem mobilen Roboter zu dem Zeitpunkt, zu dem der mobile Roboter das Einzelbild erfasst; wobei der Zielrandpunkt ein Randpunkt ist, der sich zum Zeitpunkt, zu dem der mobile Roboter das Einzelbild erfasst, in einem Aufnahmebereich der Kamera befindet;
Bestimmen der Konturinformationen des Zielobjekts auf der Grundlage der sämtlichen Einzelbildern entsprechenden Randpositionen.

8. Verfahren nach Anspruch 7, wobei das Bestimmen der Konturinformationen des Zielobjekts auf der Grundlage der sämtlichen Einzelbildern entsprechenden Randpositionen umfasst:
Verwenden der sämtlichen Einzelbildern entsprechenden Randpositionen als die Konturinformationen des Zielobjekts; oder
Durchführen einer Kurvenanpassung an den sämtlichen Einzelbildern entsprechenden Randpositionen, um mindestens eine Anpassungskurve zu erhalten, und Bestimmen von Positionen von Punkten auf der mindestens einen Anpassungskurve und Verwenden der bestimmten Positionen als die Konturinformationen des Zielobjekts.

9. Verfahren nach einem der Ansprüche 1 bis 6, wobei das Verfahren vor dem Erhalten der mehreren Einzelbilder, die das Zielobjekt enthalten und durch den mobilen Roboter während der von dem mobilen Roboter ausgeführten Umkreisungsbewegung um das Zielobjekt erfasst werden, ferner umfasst:
Identifizieren (S701) eines Objekttyps des Zielobjekts;
wenn der Objekttyp des Zielobjekts ein zu identifizierender Typ ist, Erhalten der mehreren Einzelbilder, die das Zielobjekt enthalten und durch den mobilen Roboter während der von dem mobilen Roboter ausgeführten Umkreisungsbewegung um das Zielobjekt erfasst werden; wobei der zu identifizierende Typ einen unbekannten Objekttyp oder einen Objekttyp mit einer nicht festen Form umfasst.

10. Verfahren nach Anspruch 9, wobei das Verfahren ferner umfasst:
wenn der Objekttyp des Zielobjekts ein Objekttyp mit einer festen Form ist, Bestimmen (S705) voreingestellter, dem Objekttyp des Zielobjekts entsprechender Anfangsinformationen als zu verwendende Informationen; wobei die Anfangsinformationen Anfangspositionen sämtlicher Randpunkte angeben;
Erhalten (S706) eines durch den mobilen Roboter für das Zielobjekt erfassten Bilds und Identifizieren eines relativen Abstands zwischen dem Zielobjekt und dem mobilen Roboter zu dem Zeitpunkt, zu dem der mobile Roboter das erhaltene Bild erfasst;
Anpassen (S707) der durch die zu verwendenden Informationen angegebenen Anfangspositionen sämtlicher Randpunkte auf der Grundlage des identifizierten relativen Abstands, um angepasste Positionen sämtlicher Randpunkte als die Konturinformationen des Zielobjekts zu erhalten.

11. Verfahren nach einem der Ansprüche 1 bis 6, wobei eine Art und Weise der durch den mobilen Roboter ausgeführten Umkreisungsbewegung um das Zielobjekt umfasst:
Ausführen einer kontinuierlichen Kreisbewegung um das Zielobjekt durch den mobilen Roboter, wenn die Kameraausrichtung des mobilen Roboters von einer Bewegungsrichtung des mobilen Roboters unabhängig ist; oder
Ausführen einer mehrsegmentigen Bogenbewegung um das Zielobjekt durch den mobilen Roboter, wenn die Kameraausrichtung des mobilen Roboters von einer Bewegungsrichtung des mobilen Roboters abhängig ist.

12. Verfahren nach Anspruch 1, wobei die zweiten internen und externen Parameterinformationen umfassen: einen vertikalen Blickwinkel der Kamera und eine vertikale Auflösung eines durch die Kamera erfassten Bilds;
wobei das Bestimmen der Höhe des Zielobjekts auf der Grundlage des relativen Abstands zwischen dem Zielobjekt und dem mobilen Roboter zu dem Zeitpunkt, zu dem der mobile Roboter das Einzelbild erfasst, des zweiten Abstands und der zweiten internen und externen Parameterinformationen der Kamera umfasst:
Bestimmen der Höhe des Zielobjekts durch die folgende Formel: $x = h - tan \left(θ∗\left(\frac{dv 2 _pixels}{V}\right)\right) ∗ d$
wobei x die Höhe des Zielobjekts ist, Θ der vertikale Blickwinkel ist, dv2_pixels der zweite Abstand ist, V die vertikale Auflösung ist und d der relative Abstand zwischen dem Zielobjekt und dem mobilen Roboter zu dem Zeitpunkt ist, zu dem der mobile Roboter das Einzelbild erfasst.

13. Verfahren nach einem der Ansprüche 1 bis 6, wobei das Verfahren nach dem Erhalten der mehreren Einzelbilder, die das Zielobjekt enthalten und durch den mobilen Roboter während der von dem mobilen Roboter ausgeführten Umkreisungsbewegung um das Zielobjekt erfasst werden, ferner umfasst:
für jedes der erhaltenen Einzelbilder Identifizieren eines horizontalen Ablenkwinkels zwischen dem Zielobjekt und dem mobilen Roboter zu dem Zeitpunkt, zu dem der mobile Roboter das Einzelbild erfasst; wobei der horizontale Ablenkwinkel ein horizontaler Winkel zwischen einer horizontalen Sichtlinie und der optischen Achse der Kamera in dem mobilen Roboter ist und die horizontale Sichtlinie eine Verbindungslinie zwischen dem optischen Zentrum der Kamera und einer Außenseite des Zielobjekts ist.

14. Elektronische Vorrichtung, umfassend einen Prozessor (1201), eine Kommunikationsschnittstelle (1202), einen Speicher (1203) und einen Kommunikationsbus (1204), wobei der Prozessor (1201), die Kommunikationsschnittstelle (1202) und der Speicher (1203) über den Kommunikationsbus (1204) miteinander kommunizieren;
wobei der Speicher (1203) dazu eingerichtet ist, ein Computerprogramm zu speichern;
wobei der Prozessor (1201) dazu eingerichtet ist, beim Ausführen des in dem Speicher (1203) gespeicherten Programms die Verfahrensschritte nach einem der Ansprüche 1 bis 13 auszuführen.

15. Computerlesbares Speichermedium, auf dem ein Computerprogramm gespeichert ist, das bei Ausführung durch einen Prozessor den Prozessor veranlasst, die Verfahrensschritte nach einem der Ansprüche 1 bis 13 auszuführen.

## Revendications

1. Procédé de détermination d'informations sur un objet, comprenant :
l'obtention (S101, S702) de plusieurs trames d'images contenant un objet cible, acquises par un robot mobile pendant un mouvement d'encerclement autour de l'objet cible effectué par le robot mobile, les plusieurs trames d'images étant des images de l'objet cible selon différentes orientations acquises par le robot mobile, les plusieurs trames d'images étant acquises par une caméra monoculaire dans le robot mobile ;
pour chaque trame d'image obtenue, l'identification (S102, S703) d'une distance relative entre l'objet cible et le robot mobile au moment où le robot mobile acquiert la trame d'image ;
la détermination (S103, S704) d'informations de contour de l'objet cible sur la base des distances relatives entre l'objet cible et le robot mobile aux moments où le robot mobile acquiert toutes les trames d'images, ainsi que d'informations de position du robot mobile dans le système de coordonnées mondial,
dans lequel, après l'identification de la distance relative entre l'objet cible et le robot mobile au moment où le robot mobile acquiert la trame d'image, le procédé comprend en outre :
la détermination d'une hauteur de l'objet cible sur la base de la distance relative entre l'objet cible et le robot mobile au moment où le robot mobile acquiert la trame d'image, d'une deuxième distance et de deuxièmes informations de paramètres intrinsèques et extrinsèques de la caméra dans le robot mobile ;
dans lequel la deuxième distance est une distance en pixels dans la direction verticale entre un point de pixel supérieur de l'objet cible dans la trame d'image et un point de pixel central de la trame d'image.

2. Procédé selon la revendication 1, dans lequel, pour chaque trame d'image obtenue, l'identification (S102) d'une distance relative entre l'objet cible et le robot mobile au moment où le robot mobile acquiert la trame d'image comprend :
pour chaque trame d'image obtenue, la détermination (S102A), en tant que première distance, d'une distance en pixels dans une direction verticale entre un premier point de pixel et un deuxième point de pixel dans la trame d'image ; le premier point de pixel étant un point de pixel inférieur de l'objet cible, et le deuxième point de pixel étant un point de pixel central ;
la détermination (S102B) de la distance relative entre l'objet cible et le robot mobile au moment où le robot mobile acquiert la trame d'image sur la base de la première distance et de premières informations de paramètres intrinsèques et extrinsèques de la caméra dans le robot mobile.

3. Procédé selon la revendication 2, dans lequel les premières informations de paramètres intrinsèques et extrinsèques comprennent : un angle de champ vertical de la caméra, une taille d'image de la trame d'image acquise par la caméra et une hauteur d'un centre optique de la caméra ;
la détermination (S102B) de la distance relative entre l'objet cible et le robot mobile au moment où le robot mobile acquiert la trame d'image sur la base de la première distance et des premières informations de paramètres intrinsèques et extrinsèques de la caméra dans le robot mobile comprend :
la détermination (S102B1) d'un angle de ligne de visée inférieure sur la base de la première distance, d'une résolution verticale de la trame d'image et de l'angle de champ vertical de la caméra ; l'angle de ligne de visée inférieure étant un angle entre une ligne de visée inférieure et un axe optique de la caméra, et la ligne de visée inférieure étant une ligne reliant le centre optique de la caméra à une partie inférieure de l'objet cible ;
le calcul (S102B2) de la distance relative entre l'objet cible et le robot mobile au moment où le robot mobile acquiert la trame d'image sur la base de l'angle de ligne de visée inférieure et de la hauteur du centre optique de la caméra.

4. Procédé selon la revendication 3, dans lequel la détermination (S102B1) de l'angle de ligne de visée inférieure sur la base de la première distance, de la résolution verticale de la trame d'image et de l'angle de champ vertical de la caméra comprend :
le calcul (A1), en tant que premier rapport, d'un rapport de la première distance à la résolution verticale ;
la détermination (A2) de l'angle de ligne de visée inférieure sur la base du premier rapport et de l'angle de champ vertical.

5. Procédé selon la revendication 4, dans lequel la détermination (A2) de l'angle de ligne de visée inférieure sur la base du premier rapport et de l'angle de champ vertical comprend :
le calcul, en tant qu'angle de ligne de visée inférieure, d'un produit du premier rapport et de l'angle de champ vertical ; ou
la détermination d'un coefficient d'ajustement cible correspondant à un point de pixel spécifié dans la trame d'image selon une relation de correspondance prédéfinie entre chaque point de pixel et un coefficient d'ajustement, le calcul, en tant que deuxième rapport, d'un produit du coefficient d'ajustement et du premier rapport, et le calcul, en tant qu'angle de ligne de visée inférieure, d'un produit du deuxième rapport et de l'angle de champ vertical ; chaque point de pixel étant un point de pixel dans l'image acquise par la caméra, et le point de pixel spécifié étant un point de pixel déterminé à partir de points de pixel inférieurs de l'objet cible.

6. Procédé selon la revendication 3, dans lequel le calcul de la distance relative entre l'objet cible et le robot mobile au moment où le robot mobile acquiert la trame d'image sur la base de l'angle de ligne de visée inférieure et de la hauteur du centre optique de la caméra comprend :
le calcul de la distance relative entre l'objet cible et le robot mobile au moment où le robot mobile acquiert la trame d'image au moyen de la formule suivante : $d = tan \left(90+k-m\right) ∗ h$
dans laquelle d est la distance relative, k est un angle vertical entre l'axe optique et un plan de déplacement du robot mobile, m est l'angle de ligne de visée inférieure, et h est la hauteur du centre optique de la caméra.

7. Procédé selon l'une quelconque des revendications 1 à 6, dans lequel la détermination des informations de contour de l'objet cible sur la base des distances relatives entre l'objet cible et le robot mobile aux moments où le robot mobile acquiert toutes les trames d'images, ainsi que des informations de position du robot mobile dans le système de coordonnées mondial, comprend :
pour chacune des trames d'images, la détermination d'une position d'un point de bord cible de l'objet cible, en tant que position de bord correspondant à la trame d'image, sur la base des informations de position du robot mobile dans le système de coordonnées mondial ainsi que de la distance relative entre l'objet cible et le robot mobile au moment où le robot mobile acquiert la trame d'image ; le point de bord cible étant un point de bord situé dans une plage de prise de vue de la caméra au moment où le robot mobile acquiert la trame d'image ;
la détermination des informations de contour de l'objet cible sur la base des positions de bord correspondant à toutes les trames d'images.

8. Procédé selon la revendication 7, dans lequel la détermination des informations de contour de l'objet cible sur la base des positions de bord correspondant à toutes les trames d'images comprend :
l'utilisation, en tant qu'informations de contour de l'objet cible, des positions de bord correspondant à toutes les trames d'images ; ou
la réalisation d'un ajustement de courbe sur les positions de bord correspondant à toutes les trames d'images afin d'obtenir au moins une courbe d'ajustement, la détermination de positions de points sur ladite au moins une courbe d'ajustement, et l'utilisation des positions déterminées en tant qu'informations de contour de l'objet cible.

9. Procédé selon l'une quelconque des revendications 1 à 6, dans lequel, avant l'obtention des plusieurs trames d'images contenant l'objet cible, acquises par le robot mobile pendant le mouvement d'encerclement autour de l'objet cible effectué par le robot mobile, le procédé comprend en outre :
l'identification (S701) d'un type d'objet de l'objet cible ;
si le type d'objet de l'objet cible est un type à identifier, l'obtention des plusieurs trames d'images contenant l'objet cible, acquises par le robot mobile pendant le mouvement d'encerclement autour de l'objet cible effectué par le robot mobile ; le type à identifier comprenant un type d'objet inconnu ou un type d'objet de forme non fixe.

10. Procédé selon la revendication 9, dans lequel le procédé comprend en outre :
si le type d'objet de l'objet cible est un type d'objet de forme fixe, la détermination (S705), en tant qu'informations à utiliser, d'informations initiales prédéfinies correspondant au type d'objet de l'objet cible ; les informations initiales indiquant des positions initiales de tous les points de bord ;
l'obtention (S706) d'une image acquise par le robot mobile pour l'objet cible, et l'identification d'une distance relative entre l'objet cible et le robot mobile au moment où le robot mobile acquiert l'image obtenue ;
l'ajustement (S707), sur la base de la distance relative identifiée, des positions initiales de tous les points de bord indiquées par les informations à utiliser, afin d'obtenir des positions ajustées de tous les points de bord en tant qu'informations de contour de l'objet cible.

11. Procédé selon l'une quelconque des revendications 1 à 6, dans lequel une modalité du mouvement d'encerclement autour de l'objet cible effectué par le robot mobile comprend :
l'exécution, par le robot mobile, d'un mouvement circulaire continu autour de l'objet cible lorsque l'orientation de la caméra du robot mobile est indépendante d'une direction de déplacement du robot mobile ; ou
l'exécution, par le robot mobile, d'un mouvement en arc à segments multiples autour de l'objet cible lorsque l'orientation de la caméra du robot mobile dépend d'une direction de déplacement du robot mobile.

12. Procédé selon la revendication 1, dans lequel les deuxièmes informations de paramètres intrinsèques et extrinsèques comprennent : un angle de champ vertical de la caméra et une résolution verticale d'une image acquise par la caméra ;
la détermination de la hauteur de l'objet cible sur la base de la distance relative entre l'objet cible et le robot mobile au moment où le robot mobile acquiert la trame d'image, de la deuxième distance et des deuxièmes informations de paramètres intrinsèques et extrinsèques de la caméra comprend :
la détermination de la hauteur de l'objet cible au moyen de la formule suivante : $x = h - tan \left(θ∗\left(\frac{dv 2 _pixels}{V}\right)\right) ∗ d$
dans laquelle x est la hauteur de l'objet cible, Θ est l'angle de champ vertical, dv2_pixels est la deuxième distance, V est la résolution verticale, et d est la distance relative entre l'objet cible et le robot mobile au moment où le robot mobile acquiert la trame d'image.

13. Procédé selon l'une quelconque des revendications 1 à 6, dans lequel, après l'obtention des plusieurs trames d'images contenant l'objet cible, acquises par le robot mobile pendant le mouvement d'encerclement autour de l'objet cible effectué par le robot mobile, le procédé comprend en outre :
pour chacune des trames d'images obtenues, l'identification d'un angle de déviation horizontal entre l'objet cible et le robot mobile au moment où le robot mobile acquiert la trame d'image ; l'angle de déviation horizontal étant un angle horizontal entre une ligne de visée horizontale et l'axe optique de la caméra dans le robot mobile, et la ligne de visée horizontale étant une ligne reliant le centre optique de la caméra à un côté extérieur de l'objet cible.

14. Dispositif électronique comprenant un processeur (1201), une interface de communication (1202), une mémoire (1203) et un bus de communication (1204), le processeur (1201), l'interface de communication (1202) et la mémoire (1203) communiquant entre eux par l'intermédiaire du bus de communication (1204) ;
la mémoire (1203) étant configurée pour stocker un programme informatique ;
le processeur (1201) étant configuré pour exécuter les étapes du procédé selon l'une quelconque des revendications 1 à 13 lorsqu'il exécute le programme stocké dans la mémoire (1203).

15. Support de stockage lisible par ordinateur, sur lequel est stocké un programme informatique qui, lorsqu'il est exécuté par un processeur, amène le processeur à exécuter les étapes du procédé selon l'une quelconque des revendications 1 à 13.
